# EUROPEAN PATENT SPECIFICATION

(11) **EP 4 654 563 B1**
(45) Date of publication and mention of the grant of the patent: **30.09.2026**
(21) Application number: 24835059.7
(22) Date of filing: 28.02.2024
(51) Int. Cl.: G06F 1/16, H04M 1/02, H04M 1/03, H04M 1/18, H04R 1/02

(54) **ELECTRONIC DEVICE**
ELEKTRONISCHE VORRICHTUNG
DISPOSITIF ÉLECTRONIQUE

(30) Priority: 05.07.2023 CN 202310822244
(43) Date of publication of application: 26.11.2025
(73) Proprietor: Honor Device Co., Ltd., Shenzhen, Guangdong 518040 (CN)
(72) Inventor: LIU, Tuo, Shenzhen, Guangdong 518040 (CN); WEN, Jiafei, Shenzhen, Guangdong 518040 (CN); CHEN, Jiankun, Shenzhen, Guangdong 518040 (CN)
(74) Representative: MERH-IP Matias Erny Reichl Hoffmann Patentanwälte PartG mbB
(86) International application number: PCT/CN2024/079017
(87) International publication number: WO 2025/007572

(56) References cited:
- CN-A- 113 596 206
- CN-A- 113 596 206
- CN-A- 115 097 904
- CN-U- 214 281 612
- US-A1- 2020 177 979
- US-A1- 2022 311 853

## Description

This application claims priority to Chinese Patent Application No. 202310822244.7, filed with the China National Intellectual Property Administration on July 5, 2023 and entitled "ELECTRONIC DEVICE'.

### TECHNICAL FIELD

This application relates to the technical field of electronic devices, and in particular, to an electronic device.

### BACKGROUND

With advancement of society, mobile phones achieve increasingly widespread adoption, while their replacement cycles continuously grow. Therefore, there are increasing demands for enhanced protective features and design sophistication of mobile phones. To achieve an ultra-high screen-to-body ratio, a slit-shaped sound outlet scheme is used for an earpiece. However, such a configuration creates vulnerability where water stains (e.g., user's sweat), oil stains, impurities, and the like from outside infiltrate the mobile phone through the slit. When water stains, oil stains, impurities, and the like from outside come into contact with a display panel, the display panel may fail to function normally, affecting user experience.

CN113596206A discloses an electronic device comprising a display module mounted in a frame, with a sound outlet region provided adjacent to the display and a sealing structure between a cover plate and the frame. It further indicates that, in the presence of gaps or fluctuations in the sealing structure, liquid may enter a cavity formed between the frame and the display module sidewall.

### SUMMARY

Embodiments of this application provide an electronic device, to prevent a display panel in a display screen from interference sources such as water stains and oil stains from outside, thereby increasing a service life of the display screen.

To achieve the foregoing objective, embodiments of this application adopt the following technical solutions:

The invention is defined by independent claim 1.

This application provides an electronic device. The electronic device includes a display screen and a middle frame. The display screen includes a cover plate and a display panel. The cover plate is located on a display side of the display panel. A circumferential side surface of the cover plate protrudes from a circumferential side surface of the display panel. The display screen is mounted on the middle frame. The middle frame includes a border frame. A first boss and a second boss are arranged on an inner circumferential surface of the border frame. The first boss and the second boss both extend in a circumferential direction of the inner circumferential surface of the border frame. The first boss and the second boss are spaced apart from each other. A sound outlet channel is jointly defined by the display screen, the border frame, the first boss, and the second boss. The first boss includes a first side wall surface facing away from the border frame. The second boss includes a second side wall surface facing away from the border frame. The display panel includes a first side surface. The first side surface is a side of the display panel facing the sound outlet channel. The first side surface includes a first area. The first area is an area of the first side surface corresponding to the sound outlet channel. A first adhesive is arranged on the first area. A second adhesive is arranged between the display screen and the first side wall surface. A third adhesive is arranged between the display screen and the second side wall surface. A fourth adhesive is arranged between the display screen and the inner circumferential surface of the border frame. One end of the first adhesive is connected to the second adhesive. An other end of the first adhesive is connected to the third adhesive. The second adhesive is connected to the fourth adhesive. The third adhesive is connected to the fourth adhesive.

In this way, the first adhesive, the second adhesive, the third adhesive, and the fourth adhesive jointly form protection, to prevent the circumferential side surface of the display panel from corrosion by interference sources such as water stains and oil stains in the sound outlet channel. Specifically, when the interference sources such as water stains and oil stains infiltrate the electronic device through the sound outlet channel, a part of these interference sources diffuses toward the first area. Arranging the first adhesive on the first area can prevent the first area from corrosion by the interference sources. An other part of these interference sources diffuses toward two sides of the sound outlet channel. However, the other part of these interference sources diffusing toward the two sides of the sound outlet channel is blocked by the second adhesive, the third adhesive, and the fourth adhesive. In conclusion, the interference sources infiltrating the electronic device through the sound outlet channel are blocked by the first adhesive, the second adhesive, the third adhesive, and the fourth adhesive, which cannot diffuse to the circumferential side surface of the display panel. In this way, the circumferential side surface of the display panel is prevented from corrosion by the interference sources such as water stains and oil stains in the sound outlet channel while effective sound outlet of the sound outlet channel is ensured.

In addition, arranging the fourth adhesive can achieve sealing between the cover plate and the border frame, which prevents the interference sources such as water stains and oil stains in the environment from infiltrating the electronic device through an avoidance notch between the cover plate and the border frame. Separately connecting the second adhesive and the third adhesive to the fourth adhesive can ensure more effective sealing between the cover plate and the border frame. Therefore, comprehensive guarantee is provided for normal use of the electronic device, and user experience is improved.

In a possible implementation of this application, the display screen further includes a functional layer. The functional layer is located on a side of the display panel facing away from the cover plate. The circumferential side surface of the display panel protrudes from a circumferential side surface of the functional layer. The display panel further includes a second area. The second area is located on a surface of a side of the display panel facing the functional layer. The second area is exposed from the functional layer. The second area is connected to the first area. The first adhesive is arranged on both the first area and the second area. Therefore, arranging the first adhesive on the second area can ensure prevention of the second area of the display panel from corrosion by the interference sources such as water stains and oil stains in the sound outlet channel, thereby providing more comprehensive protection for the display panel.

In a possible implementation of this application, the cover plate includes a second side surface. The second side surface and the first side surface face toward the same direction. The first adhesive includes a first portion arranged on the first area. A maximum value of a thickness of the first portion is less than or equal to a distance between the first side surface and the second side surface. In this way, the first adhesive is not exposed when a user looks toward inside of the electronic device through the avoidance notch, thereby ensuring an overall aesthetic appearance of the electronic device.

In a possible implementation of this application, the first adhesive further includes a second portion arranged on the second area. A maximum value of a thickness of the second portion is less than or equal to a thickness of the functional layer. In this way, stress between the second adhesive and the functional layer can be reduced, and deformation of the functional layer caused by pressing of the second adhesive and the first adhesive against a copper foil layer can be avoided.

In a possible implementation of this application, the first adhesive is made of a hot-melt adhesive.

In a possible implementation of this application, the border frame includes a first border frame, a second border frame, and a third border frame. The first border frame is arranged opposite the first side surface. One end of the first border frame is connected to the second border frame, and an other end of the first border frame is connected to the third border frame. The first boss includes a first sub-boss and a second sub-boss that are connected. An extension direction of the first sub-boss is parallel to an extension direction of the first border frame. An extension direction of the second sub-boss is parallel to an extension direction of the second border frame. The first sub-boss includes a first side wall sub-surface facing away from the border frame. The second sub-boss includes a second side wall sub-surface facing away from the border frame. The first side wall sub-surface and the second side wall sub-surface form the first side wall surface. The second adhesive includes a first adhesive segment and a second adhesive segment that are connected. The first adhesive segment is located between the first side wall sub-surface and the display screen. The second adhesive segment is located between the second side wall sub-surface and the display screen.

The second boss includes a third sub-boss and a fourth sub-boss that are connected. An extension direction of the third sub-boss is parallel to the extension direction of the first border frame. An extension direction of the fourth sub-boss is parallel to an extension direction of the third border frame. The third sub-boss includes a third side wall sub-surface facing away from the border frame. The fourth sub-boss includes a fourth side wall sub-surface facing away from the border frame. The third side wall sub-surface and the fourth side wall sub-surface form the second side wall surface. The third adhesive includes a third adhesive segment and a fourth adhesive segment that are connected. The third adhesive segment is located between the third side wall sub-surface and the display screen. The fourth adhesive segment is located between the fourth side wall sub-surface and the display screen. In this way, stability of the fourth adhesive arranged at a connection position between the first border frame and the second border frame and at a connection position between the first border frame and the third border frame can be ensured, and stability of the connection between the cover plate and the middle frame can be ensured.

In a possible implementation of this application, a first avoidance space is provided between the first boss and the sound outlet channel. Connection positions among the first adhesive, the second adhesive, and the fourth adhesive are located in the first avoidance space. A second avoidance space is provided between the second boss and the sound outlet channel. Connection positions among the first adhesive, the third adhesive, and the fourth adhesive are located in the second avoidance space. Therefore, arranging the first avoidance space can increase volumes of the first adhesive, the second adhesive, and the fourth adhesive, and arranging the second avoidance space can increase volumes of the first adhesive, the third adhesive, and the fourth adhesive, thereby ensuring stability of the connection.

In a possible implementation of this application, the second adhesive is made of silicone.

In a possible implementation of this application, the third adhesive is made of silicone.

In a possible implementation of this application, the middle frame further includes a middle plate. The border frame is connected to a circumferential edge of the middle plate. The electronic device further includes a fifth adhesive. The fifth adhesive is arranged between the display screen and the middle plate, and is configured to bond the display screen to the middle plate. Therefore, arranging the fifth adhesive achieves fixing of the display screen to the middle frame.

In a possible implementation of this application, the fifth adhesive includes a first end facing the sound outlet channel. The second adhesive is connected to the first end of the fifth adhesive. The third adhesive is connected to the first end of the fifth adhesive. Therefore, it is ensured that water in the environment is prevented from infiltrating the electronic device through the connection position between the third adhesive and the fifth adhesive.

In a possible implementation of this application, the first boss includes a first top surface facing away from the middle plate, and the second boss includes a second top surface facing away from the middle plate. The fourth adhesive is arranged among the cover plate, the border frame, and the first top surface and among the cover plate, the border frame, and the second top surface.

In a possible implementation of this application, the fourth adhesive is made of a hot-melt adhesive. Therefore, arranging the fourth adhesive as a hot-melt adhesive facilitates dismounting of the cover plate.

In a possible implementation of this application, an avoidance notch is provided on the cover plate, and the sound outlet channel is in communication with outside through the avoidance notch.

In a possible implementation of this application, an avoidance notch is provided on the border frame, and the sound outlet channel is in communication with outside through the avoidance notch.

### BRIEF DESCRIPTION OF DRAWINGS

FIG. 1 is a schematic structural diagram of an electronic device according to some embodiments of this application;
FIG. 2 is a cross-sectional view of the electronic device shown in FIG. 1 taken along A-A;
FIG. 3 is an enlarged view at B in FIG. 2;
FIG. 4 is a partial schematic diagram of the electronic device shown in FIG. 1;
FIG. 5 is a schematic diagram of a middle frame of an electronic device according to some other embodiments of this application;
FIG. 6 is a schematic diagram of a display screen of an electronic device according to some other embodiments of this application;
FIG. 7 is a cross-sectional view of an electronic device according to some other embodiments of this application;
FIG. 8 is a schematic diagram of an electronic device according to some embodiments of this application;
FIG. 9 is a bottom view of the display screen shown in FIG. 6;
FIG. 10 is a schematic diagram of a sound outlet channel of an electronic device according to some other embodiments of this application;
FIG. 11 is a partial schematic diagram of a middle frame according to some other embodiments of this application;
FIG. 12 is a schematic diagram of dispensing a first adhesive onto a display screen according to some other embodiments of this application; and
FIG. 13 is a schematic diagram of dispensing a second adhesive, a third adhesive, and a fourth adhesive onto a middle frame according to some other embodiments of this application.

### REFERENCE NUMERALS:

100. Electronic device; 110. Earpiece; 120. Display screen; 121. Cover plate; 1211. Second side surface; 1212. Avoidance notch; 122. Display panel; 1221. First side surface; 1222. First area; 1223. Second area; 123. Functional layer 130. Back housing; 140. Middle frame; 141. Border frame; 1411. First border frame; 1412. Second border frame; 1413. Third border frame; 142. Boss; 1421. First boss; 1421a. First side wall surface; 1422. Second boss; 1422a. Second side wall surface; 143. First avoidance space; 144. Second avoidance space; 145. Middle plate; 1451. Support surface; 150. Sound outlet channel; 161. First adhesive; 1611. First portion; 1612. Second portion; 1621. Second adhesive; 1621a. First adhesive segment; 1621b. Second adhesive segment; 1622. Third adhesive; 1622a. Third adhesive segment; 1622b. Fourth adhesive segment; 163. Fourth adhesive; 164. Fifth adhesive.

### DESCRIPTION OF EMBODIMENTS

In embodiments of this application, the terms "first", "second", and "third" are used for descriptive purposes only, and cannot be construed as indicating or implying relative importance or implicitly indicating a quantity of indicated technical features. Therefore, a feature defined by "first", "second", or "third" may explicitly or implicitly include one or more such features.

In embodiments of this application, a term "comprise", "include", or any other variant thereof is intended to encompass non-exclusive inclusion, so that a process, a method, an article, or an apparatus including a series of elements not only includes those elements, but also includes another element not listed explicitly, or further includes intrinsic elements of the process, the method, the article, or the apparatus. Without any further limitation, an element defined by a phrase "comprising/including a ..." does not exclude existence of additional same elements in the process, the method, the article, or the apparatus that includes the element.

It should be understood that the foregoing orientation or position relationship indicated by a term such as "inside" or "outside" is an orientation or position relationship shown based on the drawings, is merely intended for ease of describing the present invention and simplifying description, and is not intended to indicate or imply that a specified apparatus or element needs to have a specific orientation or be constructed and operated in a specific orientation, and therefore cannot be construed as a limitation on the present invention. Orientation terms "inside" and "outside" are defined relative to a contour of each component.

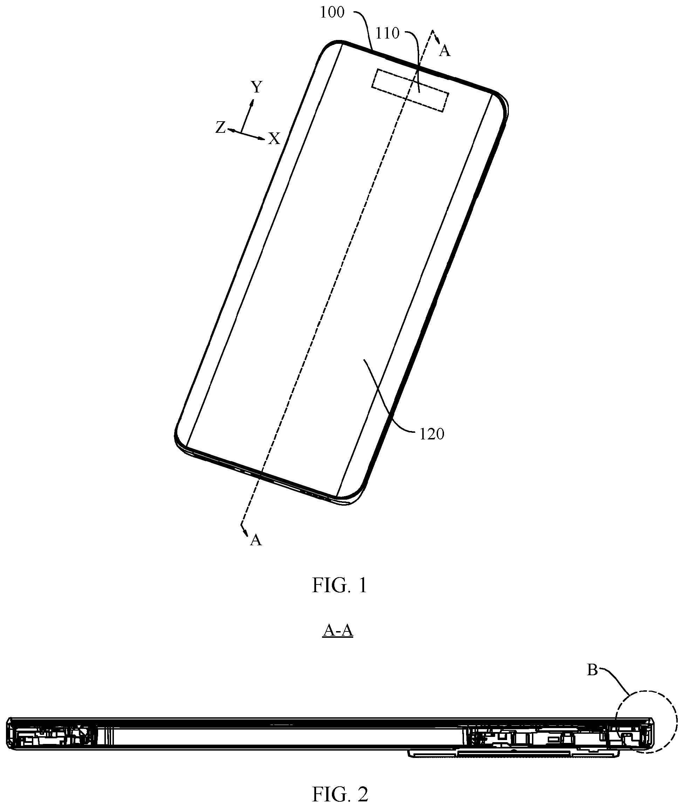

This application provides an electronic device. Refer to FIG. 1. FIG. 1 is a schematic structural diagram of an electronic device according to some embodiments of this application. The electronic device 100 is an electronic device 100 of which an earpiece 110 adopts a slit-shaped sound outlet design. The electronic device 100 may be a user equipment (user equipment, UE), a terminal device (terminal), or the like. For example, the electronic device 100 may be a large-screen display terminal, a personal digital assistant (personal digital assistant, PDA), a handheld device with a wireless communication function, a computing device, an on-board device, a wearable device, a virtual reality (virtual reality, VR) terminal device, an augmented reality (augmented reality, AR) terminal device, a display terminal in industrial control (industrial control), a display terminal in autonomous driving (self driving), a display terminal in remote medical care (remote medical), a display terminal in a smart grid (smart grid), a display terminal in transportation safety (transportation safety), a display terminal in smart city (smart city), or a display terminal in smart home (smart home). The large-screen display terminal includes but is not limited to a device such as a smart screen, a portable android device (portable android device, PAD), a notebook computer, a desktop computer, a television, or a projector.

Still refer to FIG. 1. In this embodiment and the following embodiments, an example in which the electronic device 100 is a mobile phone is used for description. The electronic device 100 is approximately in a shape of a rectangular plate. Based on this, to facilitate description of following embodiments, an XYZ coordinate system is established. A width direction of the electronic device 100 is defined as an X-axis direction, a length direction of the electronic device 100 is defined as a Y-axis direction, and a thickness direction of the electronic device 100 is defined as a Z-axis direction. It may be understood that the coordinate system of the electronic device 100 may be flexibly set based on an actual requirement. This is not specifically limited herein. In some other embodiments, the electronic device 100 may alternatively be in a shape of a square flat plate, a circular flat plate, an elliptical flat plate, or the like. This is not specifically limited herein.

In some embodiments of this application, still refer to FIG. 1. The electronic device 100 includes a display screen 120.

It may be understood that FIG. 1 shows only some example components included in the electronic device, and actual shapes, actual sizes, actual positions, and actual structures of these components are not limited by FIG. 1.

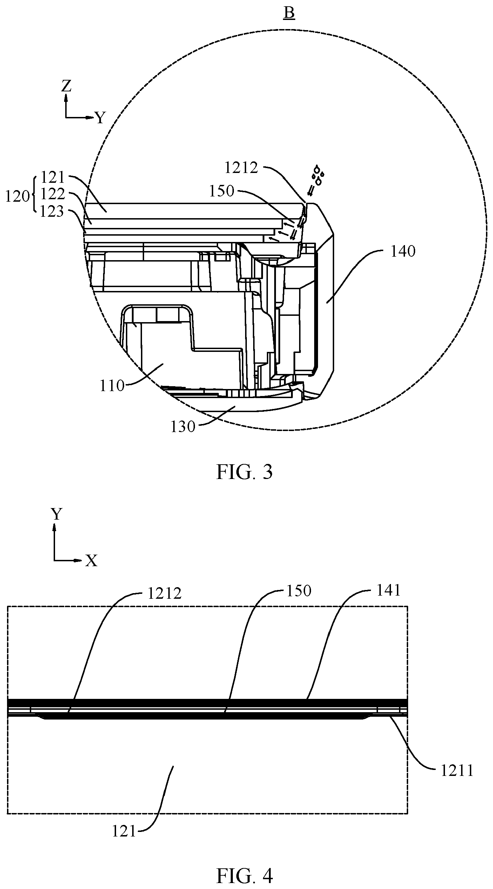

The display screen 120 is configured to display an image, a video, or the like. The display screen 120 may be a 3D display screen, a 2.5 D display screen, or the like (the display screen 120 shown in FIG. 1 is a 3D display screen). Refer to FIG. 2 and FIG. 3. FIG. 2 is a cross-sectional view of the electronic device shown in FIG. 1 taken along A-A. FIG. 3 is an enlarged view at B in FIG. 2. The display screen 120 may include a cover plate 121 and a display panel 122. The cover plate 121 and the display panel 122 are arranged in a stack. The cover plate 121 is located on a display side of the display panel 122 (for example, the cover plate 121 shown in FIG. 3 is located on a side of the display panel 122 in a positive direction of a Z axis). In other words, when a user uses the electronic device, the cover plate 121 faces the user.

An area of the cover plate 121 is greater than an area of the display panel 122, and a circumferential side surface of the cover plate 121 protrudes from a circumferential side surface of the display panel 122. The cover plate 121 completely covers the display panel 122. The cover plate 121 is mainly configured to protect the display panel 122 and prevent dust. A material of the cover plate 121 includes but is not limited to glass. The cover plate 121 further has functions such as impact resistance, scratch resistance, oil stain resistance, fingerprint resistance, and light transmittance enhancement.

A flexible display panel or a rigid display panel may be used as the display panel 122. For example, the display panel 122 may be an organic light-emitting diode (organic light-emitting diode, OLED) display panel, an active-matrix organic light-emitting diode (active-matrix organiclight-emitting diode, AMOLED) display panel, a mini light-emitting diode (mini organic lightemittingdiode) display panel, a micro light-emitting diode (micro organic light-emitting diode) display panel, a micro organic light-emitting diode (micro organic light-emitting diode) display panel, a quantum dot light-emitting diode (quantum dot light emitting diode, QLED) display panel, or a liquid crystal display (liquid crystal display, LCD) panel.

Still refer to FIG. 3. The electronic device 100 may further include a back housing 130 and a middle frame 140. The back housing 130 and the middle frame 140 together form a housing of the electronic device 100, and are configured to protect internal electronic components of the electronic device 100. The back housing 130 is located on a side of the display panel 122 (for example, a side of the display panel 122 in a negative Z direction shown in FIG. 3) away from the cover plate 121, and is arranged in a stack with and spaced apart from the cover plate 121 and the display panel 122. The middle frame 140 is located between the back housing 130 and the cover plate 121. The back housing 130 is fixed to the middle frame 140. For example, the back housing 130 may be fixedly connected to the middle frame 140 through an adhesive, or the middle frame 140 may be integrally formed with the back housing 130, that is, the middle frame 140 and the back housing 130 are a single-piece structural member. The cover plate 121, the back housing 130, and the middle frame 140 define an accommodating cavity of the electronic device 100. The accommodating cavity accommodates the display panel 122, a circuit board, a camera, a flash, and the earpiece 110.

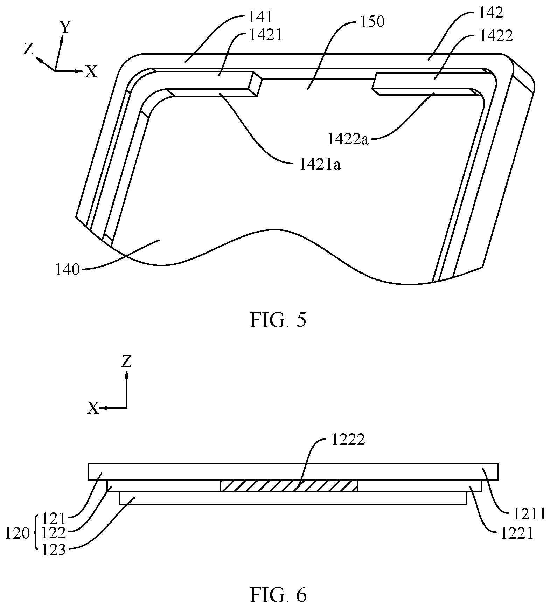

In some embodiments of this application, an example in which the electronic device 100 is a mobile phone is used. Refer to FIG. 3 to FIG. 5. FIG. 4 is a partial schematic diagram of the electronic device shown in FIG. 1. FIG. 5 is a schematic diagram of a middle frame of an electronic device according to some other embodiments of this application. To achieve an ultra-high screen-to-body ratio of the mobile phone, a slit-shaped sound outlet scheme is implemented at an earpiece of the mobile phone. The earpiece is an earpiece used during a user call, which is usually located at a top of the display screen 120 (for example, the earpiece is arranged on a side of the display screen 120 in a positive direction of a Y axis shown in FIG. 4). Specifically, the middle frame 140 includes a border frame 141. A first boss 1421 and a second boss 1422 are arranged on an inner circumferential surface of the border frame 141. The first boss 1421 and the second boss 1422 both extend in a circumferential direction of the inner circumferential surface of the border frame 141. The first boss 1421 and the second boss 1422 are spaced apart from each other. A sound outlet channel 150 is jointly defined by the display screen 120, the border frame 141, the first boss 1421, and the second boss 1422. The cover plate 121 includes a second side surface 1211 close to the earpiece, and an avoidance notch 1212 is provided on the second side surface 1211. Specifically, the avoidance notch 1212 is located at a middle position of the second side surface 1211, and is formed through recessing toward the negative direction of the Y axis. The avoidance notch 1212 is in communication with the sound outlet channel 150.

In some other embodiments, the avoidance notch may alternatively be formed on the border frame. Specifically, the avoidance notch 1212 may be provided on a side surface of the border frame on the same side as the second side surface 1211. The avoidance notch 1212 may be a through channel, through which the sound outlet channel 150 is in communication with outside.

During a call on the mobile phone, a sound is emitted from the earpiece in the accommodating cavity, which propagates to the outside of the mobile phone through the sound outlet channel 150, and is then transmitted to an ear of a user. Therefore, providing the sound outlet channel 150 omits a need to additionally provide a sound outlet hole for sound outlet on the display screen 120, thereby increasing a screen-to-body ratio of the display screen 120.

However, to ensure that the user can clearly hear the sound emitted from the earpiece, referring to FIG. 3, no physical protection is arranged on the sound outlet channel 150. Refer to a path in FIG. 3 shown by arrows. During use of the mobile phone by the user, sweat on a hand or the ear of the user easily infiltrates the mobile phone through the sound outlet channel 150, which comes into contact with the display panel 122, affecting normal operation of the display panel 122 and affecting user experience. Another solution is to arrange a nano coating on the sound outlet channel 150. However, the nano coating is subjected to corrosion by water stains such as water in the environment after long-term use of the electronic device, causing poor protection.

It may be understood that, during use of the electronic device, water stains such as sweat of the user and water in the external environment easily infiltrate the electronic device through the sound outlet channel 150, and are transferred to the display panel 122 through the sound outlet channel 150. Consequently, the display panel 122 cannot be normally used. The display panel 122 includes a plurality of functional sub-layers, and the plurality of functional sub-layers are arranged in a stack. Therefore, the circumferential side surface of the display panel 122 is formed by circumferential side surfaces of the plurality of functional sub-layers. Because sweat or water stains diffusing to the circumferential side surface of the display panel 122 easily infiltrate the display panel 122 through gaps between adjacent functional sub-layers, the circumferential side surface of the display panel 122 is extremely vulnerable to corrosion by water stains and sweat.

Specifically, the functional layers in the display panel 122 may include a polarizer (Polarizer, POL). The POL layer has a polyvinyl alcohol (PolyvinylAlcohol, PVA) film arranged thereon. When sweat comes into contact with the PVA layer, red spectral deficiency exists in a polarization process at an edge of the POL layer, causing yellow discoloration and affecting user experience.

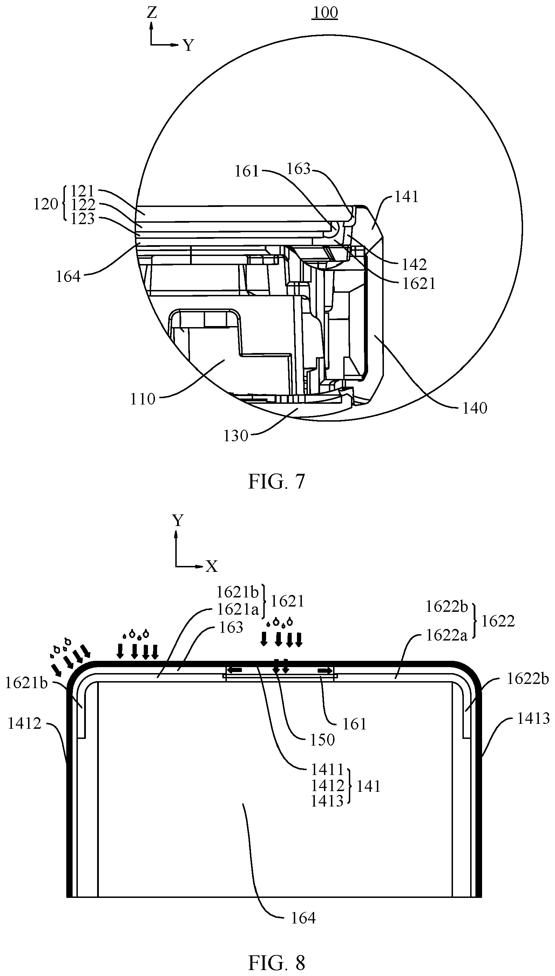

To resolve the above technical problem, refer to FIG. 5 to FIG. 7. FIG. 6 is a schematic diagram of a display screen of an electronic device according to some other embodiments of this application. FIG. 7 is a cross-sectional view of an electronic device according to some other embodiments of this application.

This application provides an adhesive electronic device. A boss 142 is arranged on an inner circumferential surface of a border frame 141 of the electronic device. The boss 142 may include a first boss 1421 and a second boss 1422. The first boss 1421 is located on one end of the sound outlet channel 150 (for example, one end of the sound outlet channel 150 in a negative direction of an X axis shown in FIG. 5), and the second boss 1422 is located on an other end of the sound outlet channel 150 (for example, an end of the sound outlet channel 150 in a positive direction of the X axis shown in FIG. 5). The first boss 1421 includes a first side wall surface 1421a facing away from the border frame 141, and the second boss 1422 includes a second side wall surface 1422a facing away from the border frame 141.

The display panel 122 includes a first side surface 1221. The first side surface 1221 and the second side surface 1211 face toward the same direction (for example, the second side surface and the first side surface are both located on a side of the display screen in a positive direction of a Y axis shown in FIG. 7). The first side surface 1221 includes a first area 1222. The first area 1222 is an area (for example, a first area 1222 shown in FIG. 6) of the first side surface 1211 corresponding to the sound outlet channel 150. Generally, the sound outlet channel 150 is located at a middle position of the second side surface 1211, and a length of the sound outlet channel 150 is generally in a range of 1/5 to 1/3 of a length of the second side surface 1211. Specifically, the length of the sound outlet channel 150 may be 1/3, 1/4, or 1/5 of the length of the second side surface 1211. The first area 1222 is located at a middle position of the second side surface 1211. A length of the first area 1222 is greater than the length of the sound outlet channel 150. The sound outlet channel 150 includes a first edge and a second edge in a length direction (for example, the X-axis direction shown in FIG. 5) of the sound outlet channel. An orthographic projection of the first edge on a plane in which the first area 1222 is located is in the first area 1222, and an orthographic projection of the second edge in the plane in which the first area 1222 is located is in the first area 1222. In other words, two ends of the first area 1222 both extend beyond two ends (the first edge and the second edge) of the sound outlet channel 150.

Refer to FIG. 6 to FIG. 8. FIG. 8 is a schematic diagram of an electronic device according to some embodiments of this application. A first adhesive 161 is arranged on the first area 1222. A second adhesive 1621 is arranged between the display screen 120 and the first side wall surface 1421a. A third adhesive 1622 is arranged between the display screen 120 and the second side wall surface 1422a. A fourth adhesive 163 is arranged between the display screen 120 and the inner circumferential surface of the border frame 141.

One end of the first adhesive 161 is hermetically connected to the second adhesive 1621. Therefore, water stains diffusing to a connection position between the first adhesive 161 and the second adhesive 1621 are prevented from infiltrating the electronic device through the connection position between the first adhesive 161 and the second adhesive 1621. The second adhesive 1621 is hermetically connected to the fourth adhesive 163. Therefore, water stains diffusing to a connection position between the second adhesive 1621 and the fourth adhesive 163 are prevented from infiltrating the electronic device through the connection position between the second adhesive 1621 and the fourth adhesive 163. An other end of the first adhesive 161 is hermetically connected to the third adhesive 1622. Therefore, water diffusing to a connection position between the first adhesive 161 and the third adhesive 1622 is prevented from infiltrating the electronic device through the connection position between the first adhesive 161 and the third adhesive 1622. The third adhesive 1622 is hermetically connected to the fourth adhesive 163. Therefore, water diffusing to a connection position between the third adhesive 1622 and the fourth adhesive 163 is prevented from infiltrating the electronic device.

In this way, the first adhesive 161, the second adhesive 1621, the third adhesive 1622, and the fourth adhesive 163 jointly form adhesive protection, to prevent the circumferential side surface of the display panel 122 from corrosion by the water stains in the sound outlet channel 150. Specifically, refer to a path in FIG. 8 shown by arrows. After water stains infiltrate the electronic device 100 through the sound outlet channel 150, a part of the water stains diffuses toward the first area 1222. Arranging the first adhesive 161 on the first area 1222 prevents the first area 1222 from corrosion by the water stains. An other part of the sweat diffuses toward two sides of the sound outlet channel 150 (for example, two sides of the sound outlet channel 150 in an X-axis direction shown in FIG. 8). However, the other part of the sweat diffusing toward the two sides of the sound outlet channel 150 is blocked by the second adhesive 1621, the third adhesive 1622, and the fourth adhesive 163.

In conclusion, the sweat infiltrating the electronic device 100 through the sound outlet channel 150 is blocked by the first adhesive 161, the second adhesive 1621, the third adhesive 1622, and the fourth adhesive 163, and does not diffuse to the circumferential side surface of the display panel 122, thereby preventing the circumferential side surface of the display panel 122 from corrosion by the water stains in the sound outlet channel 150 while ensuring good sound outlet performance of the electronic device.

In addition, arranging the fourth adhesive 163 can achieve sealing between the cover plate 121 and the border frame 141, to prevent water in the environment from infiltrating the electronic device 100 through a gap between the cover plate 121 and the border frame 141, and connecting the second adhesive 1621 to the fourth adhesive 163 and connecting the third adhesive 1622 to the fourth adhesive 163 can ensure more effective sealing between the cover plate 121 and the border frame 141. In this way, comprehensive guarantee is provided for normal use of the electronic device 100, and user experience is improved.

In some embodiments of this application, an end of the first boss 1421 facing away from the sound outlet channel 150 is connected to an end of the second boss 1422 facing away from the sound outlet channel 150.

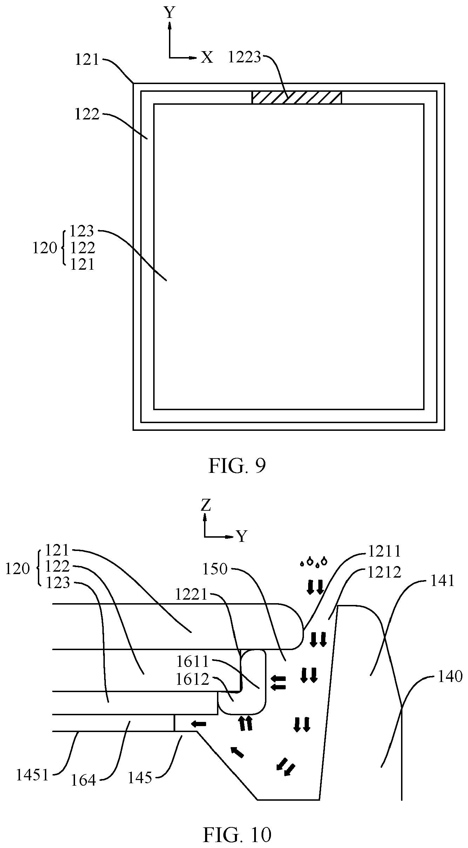

In some embodiments of this application, refer to FIG. 9 and FIG. 7. FIG. 9 is a bottom view of the display screen shown in FIG. 6. The display screen 120 may further include a functional layer 123. Specifically, the functional layer 123 may be a copper foil layer. The copper foil layer is configured to block electromagnetic interference in the display screen 120. The copper foil layer and the display panel 122 are arranged in a stack. The copper foil layer is located on a side of the display panel 122 facing away from the cover plate 121. The circumferential side surface of the display panel 122 protrudes from a circumferential side surface of the copper foil layer. The copper foil layer is bonded to the display panel 122 by using a grid adhesive. A foam layer may be arranged on a side of the copper foil layer facing the display panel 122, to avoid hard collision between the copper foil layer and the display panel 122.

The display panel 122 may further include a second area 1223. The second area 1223 is located on a surface of the side of the display panel 122 facing away from the cover plate 121. The second area 1223 is exposed from the functional layer. The second area 1223 is connected to the first area 1222. The first adhesive 161 covers the first area 1222 and the second area 1223. In this way, the first adhesive 161 can cover an area of the display panel 122 exposed from the sound outlet channel 150, thereby providing comprehensive protection for the display panel 122.

It may be understood that, refer to FIG. 10. FIG. 10 is a schematic diagram of a sound outlet channel of an electronic device according to some other embodiments of this application. Refer to a path in FIG. 10 shown by arrows. The second area 1223 of the display panel 122 is exposed to a space of the sound outlet channel 150. Therefore, sweat stains and water vapors entering the sound outlet channel 150 from the outside come into contact with the second area 1223. Because the display panel 122 has a plurality of electronic components arranged thereon on, the display panel 122 may be damaged after the sweat diffuses to the second area 1223. The first adhesive 161 applied on the second area 1223 can shield the second area 1223 on the display panel 122 connected to the first area 1222, to prevent the water vapors and the sweat in the sound outlet channel 150 from corroding the second area 1223, thereby providing more comprehensive protection for the display panel 122. In this way, the display panel 122 is prevented from corrosion by the sweat and the water vapors in the sound outlet channel 150.

The first adhesive 161 may include a first portion 1611. The first portion 1611 is arranged on the first area 1222. A maximum value of a thickness of the first portion 1611 is less than or equal to a distance between the second side surface 1211 and the first side surface 1221. It should be noted that the first adhesive 161 is dispensed by using a dispenser. In the entire dispensing process, the dispenser cannot achieve a completely uniform thickness. When a maximum value of the thickness of the first portion 1611 is less than or equal to the distance between the second side surface 1211 and the first side surface 1221, i.e., the thickness of the entire first portion 1611 is less than or equal to the distance between the second side surface 1211 and the first side surface 1221, the first portion 1611 does not protrude from the second side surface 1211. Therefore, the first adhesive 161 in invisible to a user when the user observes inside of the electronic device 100 through the avoidance notch, thereby improving product quality of the electronic device, ensuring an overall beautiful appearance of the electronic device 100, and improving user experience.

The first adhesive 161 may further include a second portion 1612. The second portion 1612 is arranged on the second area 1223. A maximum value of a thickness of the second portion 1612 is less than or equal to a thickness of the functional layer 123. In other words, the thickness of the entire second portion 1612 is less than or equal to the thickness of the functional layer 123. That is to say, the second portion 1612 does not protrude from a bottom surface of the functional layer 123. It should be noted that the second adhesive 1621 and the third adhesive 1622 abut against the bottom surface of the functional layer 123, and the second adhesive 1621 and the third adhesive 1622 have a specific stress on the functional layer 123. When the second portion 1612 protrudes from the bottom surface of the functional layer 123, the second portion 1612 of the first adhesive 161 encroaches on the second adhesive 1621 and the third adhesive 1622, resulting in an increased stress of the second adhesive 1621 and the third adhesive 1622 on the functional layer 123 and creating a deformation risk on the functional layer 123. Therefore, defining the maximum value of the thickness of the second portion 1612 to be less than or equal to the thickness of the functional layer 123 can avoid deformation of the functional layer 123 resulted from the foregoing reason.

The first adhesive 161 is made of a hot-melt adhesive. If the first adhesive 161 is damaged after long-term use of the electronic device 100, the display screen 120 may be dismounted from the middle frame 140, and then the first adhesive 161 is heated. Because the first adhesive 161 is made of a hot-melt adhesive, the first adhesive may be removed after heating, and a new hot-melt adhesive may be applied.

In some embodiments of this application, the first portion 1611 and the second portion 1612 of the first adhesive 161 are connected.

In some embodiments of this application, still refer to FIG. 8. The second adhesive 1621 is located on one side of the sound outlet channel 150 (for example, a side of the sound outlet channel 150 in a negative direction of an X axis shown in FIG. 8), and the third adhesive 1622 is located on an other side of the sound outlet channel 150 (for example, a side of the sound outlet channel 150 in a positive direction of the X axis shown in FIG. 8).

Therefore, on the one hand, the second adhesive 1621 can avoid the sound outlet channel 150, blocking of the sound outlet channel 150 by the second adhesive 1621 and the third adhesive 1622 can be avoided, and normal sound outlet of the sound outlet channel 150 can be ensured. On the other hand, application volumes of the second adhesive 1621 and the third adhesive 1622 can be reduced, thereby reducing production costs of the electronic device 100, reducing an entire weight of the electronic device 100, and improving user experience.

The second adhesive 1621 is connected to one end of the first adhesive 161 (for example, an end of the first adhesive 161 in the negative direction of the X axis shown in FIG. 8). Therefore, water diffusing to the connection position between the second adhesive 1621 and the first adhesive 161 is prevented from infiltrating the electronic device through the connection position between the second adhesive 1621 and the first adhesive 161. The second adhesive 1621 is connected to the fourth adhesive 163. Therefore, water at the connection position between the second adhesive 1621 and the fourth adhesive 163 is prevented from infiltrating the electronic device through the connection position between the second adhesive 1621 and the fourth adhesive 163.

The third adhesive 1622 is connected to an other end of the first adhesive 161 (for example, an end of the first adhesive 161 in the positive direction of the X axis shown in FIG. 8). Therefore, water stains diffusing to the connection position between the third adhesive 1622 and the first adhesive 161 are prevented from infiltrating the electronic device through the connection position between the third adhesive 1622 and the first adhesive 161. The third adhesive is connected to the fourth adhesive. Therefore, water diffusing to the connection position between the third adhesive 1622 and the fourth adhesive 163 is prevented from infiltrating the electronic device through the connection position between the third adhesive 1622 and the fourth adhesive 163.

Still refer to FIG. 8 and FIG. 10. The border frame 141 may include a first border frame 1411, a second border frame 1412, and a third border frame 1413. The first border frame 1411 is arranged opposite the second side surface 1211. One end of the first border frame 1411 (for example, an end of the first border frame 1411 in the negative direction of the X axis shown in FIG. 8) is connected to the second border frame 1412. An other end of the first border frame 1411 (for example, an end of the first border frame 1411 in the positive direction of the X axis shown in FIG. 8) is connected to the third border frame 1413. The second adhesive 1621 is formed as an "L"-shaped adhesive. The third adhesive 1622 is formed as an "L"-shaped adhesive.

Specifically, the first boss includes a first sub-boss and a second sub-boss that are connected. An extension direction of the first sub-boss is parallel to an extension direction of the first border frame 1411. An extension direction of the second sub-boss is parallel to an extension direction of the second border frame 1412. The first sub-boss includes a first side wall sub-surface facing away from the border frame 141. The second sub-boss includes a second side wall sub-surface facing away from the border frame 141. The first side wall sub-surface and the second side wall sub-surface form the first side wall surface 1421a. A first adhesive segment 1621a is located between the first side wall sub-surface and the display screen 120. A second adhesive segment 1621b is located between the second side wall sub-surface and the display screen 120. The first adhesive segment 1621a and the second adhesive segment 1621b are connected at a transition position between the first border frame 1411 and the second border frame 1412.

The second boss includes a third sub-boss and a fourth sub-boss that are connected. An extension direction of the third sub-boss is parallel to the extension direction of the first border frame 1411. An extension direction of the fourth sub-boss is parallel to an extension direction of the third border frame 1413. The third sub-boss includes a third side wall sub-surface facing away from the border frame 141. The fourth sub-boss includes a fourth side wall sub-surface facing away from the border frame 141. The third side wall sub-surface and the fourth side wall sub-surface form the second side wall surface 1422a. The third adhesive 1622 includes a third adhesive segment 1622a and a fourth adhesive segment 1622b that are connected. The third adhesive segment 1622a is located between the third side wall sub-surface and the display screen 120. The fourth adhesive segment 1622b is located between the fourth side wall sub-surface and the display screen 120. The third adhesive segment 1622a and the fourth adhesive segment 1622b are connected at a transition position between the first border frame 1411 and the third border frame 1413.

It should be noted that the fourth adhesive 163 is arranged flatly and linearly on the first border frame 1411, the second border frame 1412, and the third border frame 1413. However, because the connection position between the first border frame 1411 and the second border frame 1412 and the connection position between the first border frame 1411 and the third border frame 1413 are transition positions, adhesive dispensing thereon is of large difficulty. Because the second adhesive 1621 is arranged as an "L"-shaped adhesive, the transition position between the first border frame 1411 and the second border frame 1412 can be well wrapped. Because the third adhesive 1622 is arranged as an "L"-shaped adhesive, the transition position between the first border frame 1411 and the third border frame 1413 can be well wrapped.

Specifically, refer to FIG. 8. The border frame 141 is arranged as a rounded corner at the transition position, and the cover plate is also arranged as a rounded corner at the transition position. The two rounded corners are engaged with each other. A size of the rounded corner may be determined based on a size of the electronic device and a specific design requirement. It is difficult to ensure engagement precision during connection between the cover plate and the border frame at the transition position. Therefore, it is difficult to dispense the fourth adhesive 163 at the transition position, and sealing at the transition position cannot be ensured.

However, an adhesive dispensing amount of the dispenser per unit time is generally fixed. In addition, when the fourth adhesive 163 is arranged at the transition position, the dispenser needs to continuously change in direction. Therefore, it is difficult to ensure sealing at the transition position through the fourth adhesive 163. The second adhesive 1621 and the third adhesive 1622 arranged in the "L" shape can compensate for a processing error between the border frame 141 and the cover plate at the transition position, to provide a stable dispensing space for dispensing the fourth adhesive 163, thereby ensuring stability of the engagement between the cover plate and the border frame 141 after the fourth adhesive 163 is dispensed.

In addition, refer to the path in FIG. 8 shown by arrows. At the transition position between the first border frame 1411 and the second border frame 1412 and the transition position between the first border frame 1411 and the third border frame 1413, water stains such as water vapors in the external environment are likely to infiltrate the electronic device. Therefore, through the arrangement of the second adhesive 1621 at the transition position between the first border frame 1411 and the second border frame 1412, the third adhesive 1622 at the transition position between the first border frame 1411 and the third border frame 1413, and then the fourth adhesive 163, better sealing at the transition positions can be ensured, thereby preventing water stains such as sweat and water in the external environment from infiltrating the electronic device, providing better protection for the electronic components inside the electronic device, and improving product quality.

Specifically, in some embodiments, the second adhesive 1621 and the third adhesive 1622 may be made of silicone. The adhesives made of silicone have advantages such as good electrical insulation performance, resistance to aging, high adsorption performance, good thermal stability, and stable chemical properties.

In some embodiments of this application, still refer to FIG. 8 to FIG. 10. The middle frame 140 may further include a middle plate 145, and the border frame 141 is connected to a circumferential edge of the middle plate 145. The electronic device may further include a fifth adhesive 164. The fifth adhesive 164 is arranged between the display screen 120 and the middle plate 145, and is configured to bond the display screen 120 to the middle plate 145.

The fifth adhesive 164 includes a first end facing the sound outlet channel. The second adhesive 1621 is hermetically connected to the first end of the fifth adhesive 164. The third adhesive 1622 is hermetically connected to the first end of the fifth adhesive 164.

Specifically, on the one hand, the middle plate 145 includes a support surface 1451 facing the display screen 120, and the fifth adhesive 164 is arranged on a surface of a side of the display screen 120 facing the support surface 1451. Arranging the fifth adhesive 164 between the display screen 120 and the middle plate 145 achieves fixing of the display screen 120 to the middle plate 145 of the middle frame 140.

On the other hand, the first end of the fifth adhesive 164 is separately connected to the second adhesive 1621 and the third adhesive 1622, which can avoid formation of a gap between the second adhesive 1621 and the fifth adhesive 164 and avoid formation of a gap between the third adhesive 1622 and the fifth adhesive 164, thereby preventing impact on normal use of the electronic device as a result of water stains in the environment infiltrating a space between the display screen 120 and the middle plate 145 through the gap between the second adhesive 1621 and the fifth adhesive 164 and the gap between the third adhesive 1622 and the fifth adhesive 164.

In some embodiments of this application, the fourth adhesive 163 and the fifth adhesive 164 may also be made of a hot-melt adhesive. In this case, when the inside of the electronic device during long-term use of the electronic device needs maintenance, the display screen 120 may be separated from the border frame 141 merely through heating the fourth adhesive 163, and the display screen 120 may be separated from the middle frame 140 merely through heating of the fifth adhesive 164, to perform maintenance on the inside of the electronic device.

Still refer to a path in FIG. 10 shown by arrows. Sweat and water stains entering the sound outlet channel 150 and diffusing to a side of the functional layer 123 facing away from the cover plate 121 are blocked by the fifth adhesive 164, thereby further preventing the water stains entering the sound outlet channel 150 from infiltrating the electronic device. Therefore, through the first adhesive 161, the second adhesive 1621, the third adhesive 1622, the fourth adhesive 163, and the fifth adhesive 164 that are engaged with each other, better protection can be provided for the electronic device.

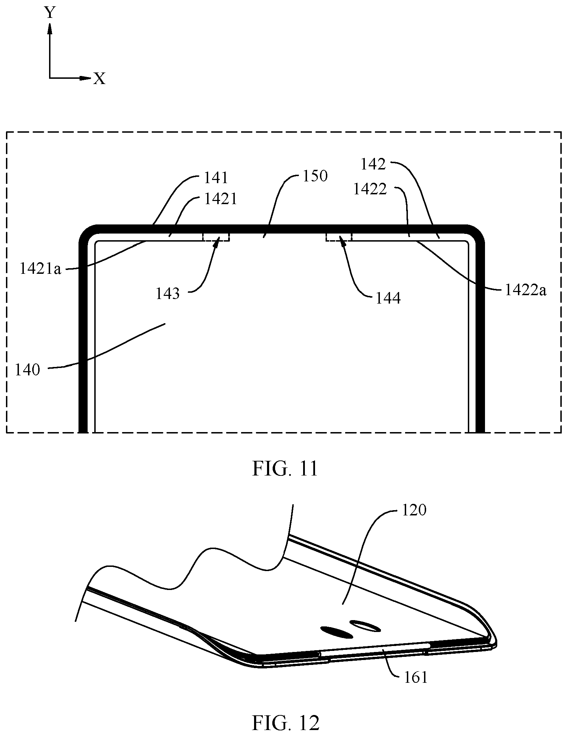

In some embodiments of this application, refer to FIG. 11. FIG. 11 is a partial schematic diagram of a middle frame according to some other embodiments of this application. A first avoidance space 143 is provided between the first boss 1421 and the sound outlet channel 150, and a second avoidance space 144 is provided between the second boss 1422 and the sound outlet channel 150. The first boss 1421 is arranged on one side of the sound outlet channel 150 (for example, a side of the sound outlet channel 150 in a negative direction of an X axis shown in FIG. 11). A spacing exists between the first boss 1421 and the sound outlet channel 150, in which no boss is arranged. A space between the first boss 1421 and the sound outlet channel 150 is the first avoidance space 143.

Similarly, the second boss 1422 is located on an other side of the sound outlet channel 150 (for example, a side of the sound outlet channel 150 in a positive direction of the X axis shown in FIG. 11). A spacing exists between the second boss 1422 and the sound outlet channel 150, in which no boss is arranged. A space between the second boss 1422 and the sound outlet channel 150 is the second avoidance space 144.

It should be noted that because the first adhesive, the second adhesive, and the fourth adhesive are connected at a position of the first avoidance space, providing the first avoidance space 143 can enlarge an arrangement space for the first adhesive, the second adhesive, and the fourth adhesive in the first avoidance space 143, so as to increase volumes of the first adhesive, the second adhesive, and the fourth adhesive in the first avoidance space 143, thereby enhancing stability of the connection among the first adhesive, the second adhesive, and the fourth adhesive in the first avoidance space 143, ensuring sealing among the first adhesive, the second adhesive, and the fourth adhesive, and preventing water stains in the external environment from infiltrating the electronic device through the connection positions among the first adhesive, the second adhesive, and the fourth adhesive.

Because the first adhesive, the third adhesive, and the fourth adhesive are connected at a position of the second avoidance space, providing the second avoidance space 143 can enlarge an arrangement space for the first adhesive, the third adhesive, and the fourth adhesive in the second avoidance space 144, thereby enhancing stability of the connection among the first adhesive, the third adhesive, and the fourth adhesive in the second avoidance space 144, ensuring sealing among the first adhesive, the third adhesive, and the fourth adhesive, and preventing water stains in the external environment from infiltrating the electronic device through the connection positions among the first adhesive, the third adhesive, and the fourth adhesive.

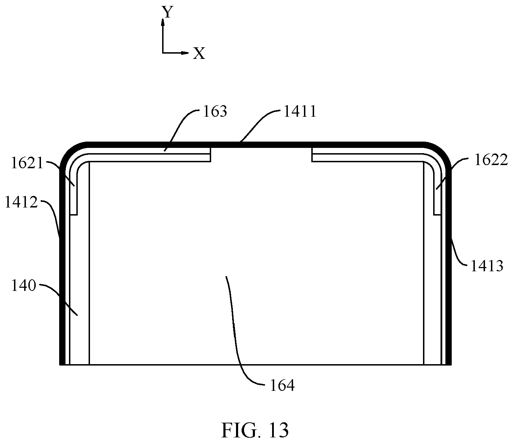

Therefore, on the one hand, providing the first avoidance space 143 can strengthen the connection among the second adhesive 1621, the first adhesive 161, and the fourth adhesive 163, and providing the second avoidance space 143 can strengthen the connection among the third adhesive 1622, the first adhesive 161, and the fourth adhesive 163. On the other hand, because the first avoidance space 143 and the second avoidance space 144 are provided, a user is prevented from seeing the bosses through the avoidance notch when the user uses the electronic device, thereby improving an overall aesthetic sense of the electronic device and improving user experience. For a specific dispensing process, refer to FIG. 12 and FIG. 13. FIG. 12 is a schematic diagram of dispensing a first adhesive onto a display screen according to some other embodiments of this application. FIG. 13 is a schematic diagram of dispensing a second adhesive, a third adhesive, and a fourth adhesive onto a middle frame according to some other embodiments of this application. First, the first adhesive 161 is dispensed onto a corresponding position on the display screen 120. Then, the second adhesive 1621 and the third adhesive 1622 are dispensed onto corresponding positions on the middle frame 140. Next, the fourth adhesive 163 is dispensed onto a corresponding position on the middle frame 140. Finally, the display screen 120 is mounted onto the middle frame 140. The fifth adhesive 164 is further arranged between the display screen 120 and the middle frame 140.

Because the first adhesive 161, the second adhesive 1621, the third adhesive 1622, the fourth adhesive 163, and the fifth adhesive 164 are arranged to be engaged each other, where the second adhesive 1621 is connected to the first adhesive 161, the second adhesive 1621 is connected to the fourth adhesive 163, the second adhesive 1621 is connected to the fifth adhesive 164, the third adhesive 1622 is connected to the first adhesive 161, the third adhesive 1622 is connected to the fourth adhesive 163, and the third adhesive 1622 is connected to the fifth adhesive 164, comprehensive protection is provided for the electronic device, thereby preventing water in the external environment from infiltrating the electronic device and preventing the electronic components inside the electronic device from corrosion.

In the description of this specification, the specific features, structures, materials, or characteristics may be combined in a proper manner in any one or more of the embodiments or examples.

Finally, it should be noted that the foregoing embodiments are merely used for describing the technical solutions of this application, and are not intended to limit this application. Although this application is described in detail with reference to the foregoing embodiments, a person of ordinary skill in the art should understand that modifications may still be made to the technical solutions described in the foregoing embodiments, or equivalent replacements may be made to a part of the technical features, and these modifications or replacements do not make the essence of the corresponding technical solutions depart from the scope of the technical solutions of embodiments of this application.

## Claims

1. An electronic device (100), comprising:
a display screen (120), wherein the display screen comprises a cover plate (121) and a display panel, the cover plate is located on a display side of the display panel, and a circumferential side surface of the cover plate protrudes from a circumferential side surface of the display panel (122), and
a middle frame (140), wherein the display screen is mounted on the middle frame, the middle frame comprises a border frame (141) and a middle plate, the border frame is connected to a circumferential edge of the middle plate (145); a first boss (1421) and a second boss (1422) are arranged on an inner circumferential surface of the border frame, the first boss and the second boss both extend in a circumferential direction of the inner circumferential surface of the border frame, the first boss and the second boss are spaced apart from each other, and a sound outlet channel (150) is jointly defined by the display screen, the border frame, the first boss, and the second boss;
the first boss comprises a first side wall surface (1221) facing away from the border frame and a first top surface facing away from the middle plate, and the second boss comprises a second side wall surface facing away from the border frame and a second top surface facing away from the middle plate;
the display panel comprises a first side surface, the first side surface is a side of the display panel facing the sound outlet channel, the first side surface comprises a first area (1222), and the first area is corresponding to the sound outlet channel; and
a first adhesive (161) is arranged on the first area, a second adhesive (1621) is arranged between the display screen and the first side wall surface, a third adhesive (1622) is arranged between the display screen and the second side wall surface, a fourth adhesive (163) is arranged between the cover plate and the first top surface and arranged between the cover plate and the second top surface, one end of the first adhesive is connected to the second adhesive, an other end of the first adhesive is connected to the third adhesive, the second adhesive is connected to the fourth adhesive, and the third adhesive is connected to the fourth adhesive.

2. The electronic device according to claim 1, wherein the display screen further comprises a functional layer, the functional layer is located on a side of the display panel facing away from the cover plate, and the circumferential side surface of the display panel protrudes from a circumferential side surface of the functional layer;
the display panel further comprises a second area, the second area is located on a surface of a side of the display panel facing the functional layer, the second area is exposed from the functional layer, and the second area is connected to the first area; and
the first adhesive is arranged on both the first area and the second area.

3. The electronic device according to claim 2, wherein the cover plate comprises a second side surface, the second side surface and the first side surface face toward the same direction, the first adhesive comprises a first portion arranged on the first area, and a maximum value of a thickness of the first portion is less than or equal to a distance between the first side surface and the second side surface.

4. The electronic device according to claim 2 or 3, wherein the first adhesive further comprises a second portion arranged on the second area, and a maximum value of a thickness of the second portion is less than or equal to a thickness of the functional layer.

5. The electronic device according to any one of claims 1 to 4, wherein the first adhesive is made of a hot-melt adhesive.

6. The electronic device according to any one of claims 1 to 5, wherein the border frame comprises a first border frame, a second border frame, and a third border frame, the first border frame is arranged opposite the first side surface, one end of the first border frame is connected to the second border frame, and an other end of the first border frame is connected to the third border frame;
the first boss comprises a first sub-boss and a second sub-boss that are connected, an extension direction of the first sub-boss is parallel to an extension direction of the first border frame, an extension direction of the second sub-boss is parallel to an extension direction of the second border frame, the first sub-boss comprises a first side wall sub-surface facing away from the border frame, the second sub-boss comprises a second side wall sub-surface facing away from the border frame, the first side wall sub-surface and the second side wall sub-surface form the first side wall surface, the second adhesive comprises a first adhesive segment and a second adhesive segment that are connected, the first adhesive segment is located between the first side wall sub-surface and the display screen, and the second adhesive segment is located between the second side wall sub-surface and the display screen; and/or
the second boss comprises a third sub-boss and a fourth sub-boss that are connected, an extension direction of the third sub-boss is parallel to the extension direction of the first border frame, an extension direction of the fourth sub-boss is parallel to an extension direction of the third border frame, the third sub-boss comprises a third side wall sub-surface facing away from the border frame, the fourth sub-boss comprises a fourth side wall sub-surface facing away from the border frame, the third side wall sub-surface and the fourth side wall sub-surface form the second side wall surface, the third adhesive comprises a third adhesive segment and a fourth adhesive segment that are connected, the third adhesive segment is located between the third side wall sub-surface and the display screen, and the fourth adhesive segment is located between the fourth side wall sub-surface and the display screen.

7. The electronic device according to any one of claims 1 to 6, wherein a first avoidance space is provided between the first boss and the sound outlet channel, and connection positions among the first adhesive, the second adhesive, and the fourth adhesive are located in the first avoidance space; and
a second avoidance space is provided between the second boss and the sound outlet channel, and connection positions among the first adhesive, the third adhesive, and the fourth adhesive are located in the second avoidance space.

8. The electronic device according to any one of claims 1 to 7, wherein the second adhesive is made of silicone, and/or the third adhesive is made of silicone.

9. The electronic device according to any one of claims 1 to 8,
wherein the electronic device further comprises a fifth adhesive, wherein the fifth adhesive is arranged between the display screen and the middle plate and is configured to bond the display screen to the middle plate.

10. The electronic device according to claim 9, wherein the fifth adhesive comprises a first end facing the sound outlet channel, the second adhesive is connected to the first end of the fifth adhesive, and the third adhesive is connected to the first end of the fifth adhesive.

11. The electronic device according to any one of claims 1 to 10, wherein the fourth adhesive is made of a hot-melt adhesive.

12. The electronic device according to any one of claims 1 to 11, wherein an avoidance notch is provided on the cover plate, or an avoidance notch is provided on the border frame; and
the sound outlet channel is in communication with outside through the avoidance notch.

13. The electronic device according to any one of claims 1-12, wherein the sound outlet channel includes a first edge and a second edge in a length direction, an orthographic projection of the first edge on a plane in which the first area is located is in the first area, and an orthographic projection of the second edge in the plane in which the first area is located is in the first area.

14. The electronic device according to any one of claims 1-13, wherein an end of the first boss facing away from the sound outlet channel is connected to an end of the second boss facing away from the sound outlet channel.

15. The electronic device according to any one of claims 1-14, wherein the second adhesive is located on one side of the sound outlet channel and the third adhesive is located on an other side of the sound outlet channel.

## Patentansprüche

1. Elektronisches Gerät (100), umfassend:
einen Anzeigebildschirm (120), wobei der Anzeigebildschirm eine Deckplatte (121) und ein Anzeigefeld umfasst, wobei die Deckplatte auf einer Anzeigeseite des Anzeigefeldes angeordnet ist und eine umlaufende Seitenfläche der Deckplatte von einer umlaufenden Seitenfläche des Anzeigefeldes (122) hervorsteht, und
einen Mittelrahmen (140), wobei der Anzeigebildschirm am Mittelrahmen montiert ist, wobei der Mittelrahmen einen Rahmen (141) und eine Mittelplatte umfasst, wobei der Rahmen mit einem umlaufenden Rand der Mittelplatte (l45) verbunden ist; wobei ein erster Vorsprung (1421) und ein zweiter Vorsprung (1422) an einer inneren Umfangsfläche des Rahmens angeordnet sind, wobei sich sowohl der erste Vorsprung als auch der zweite Vorsprung in einer Umfangsrichtung der inneren Umfangsfläche des Rahmens erstrecken, wobei der erste Vorsprung und der zweite Vorsprung voneinander beabstandet sind und ein Tonauslasskanal (150) gemeinsam durch den Anzeigebildschirm, den Rahmen, den ersten Vorsprung und den zweiten Vorsprung definiert wird;
wobei der erste Vorsprung eine erste Seitenwandfläche (1221) umfasst, die vom Rahmen abgewandt ist, und eine erste Oberseite, die von der Mittelplatte abgewandt ist, und wobei der zweite Vorsprung eine zweite Seitenwandfläche umfasst, die vom Rahmen abgewandt ist, und eine zweite Oberseite, die von der Mittelplatte abgewandt ist;
wobei das Anzeigefeld eine erste Seitenfläche umfasst, wobei die erste Seitenfläche eine Seite des Anzeigefeldes ist, die dem Tonauslasskanal zugewandt ist, wobei die erste Seitenfläche einen ersten Bereich (1222) umfasst und der erste Bereich dem Tonauslasskanal entspricht; und
ein erstes Klebemittel (161) auf dem ersten Bereich angeordnet ist, ein zweites Klebemittel (1621) zwischen dem Anzeigebildschirm und der ersten Seitenwandfläche angeordnet ist, ein drittes Klebemittel (1622) zwischen dem Anzeigebildschirm und der zweiten Seitenwandfläche angeordnet ist, ein viertes Klebemittel (163) zwischen der Deckplatte und der ersten Oberseite sowie zwischen der Deckplatte und der zweiten Oberseite angeordnet ist, wobei ein Ende des ersten Klebemittels mit dem zweiten Klebemittel verbunden ist, ein anderes Ende des ersten Klebemittels mit dem dritten Klebemittel verbunden ist, das zweite Klebemittel mit dem vierten Klebemittel verbunden ist und das dritte Klebemittel mit dem vierten Klebemittel verbunden ist.

2. Elektronisches Gerät nach Anspruch 1, wobei der Anzeigebildschirm ferner eine Funktionsschicht umfasst, wobei die Funktionsschicht auf einer Seite des Anzeigefeldes angeordnet ist, die von der Deckplatte abgewandt ist, und die umlaufende Seitenfläche des Anzeigefeldes von einer umlaufenden Seitenfläche der Funktionsschicht hervorsteht;
das Anzeigepanel umfasst ferner einen zweiten Bereich, wobei der zweite Bereich auf einer Oberfläche einer Seite des Anzeigepanels angeordnet ist, die der Funktionsschicht zugewandt ist, wobei der zweite Bereich von der Funktionsschicht freiliegt und der zweite Bereich mit dem ersten Bereich verbunden ist; und
der erste Klebstoff ist sowohl auf dem ersten Bereich als auch auf dem zweiten Bereich angeordnet.

3. Elektronisches Gerät nach Anspruch 2, wobei die Abdeckplatte eine zweite Seitenfläche umfasst, wobei die zweite Seitenfläche und die erste Seitenfläche in dieselbe Richtung weisen, wobei der erste Klebstoff einen ersten Abschnitt umfasst, der auf dem ersten Bereich angeordnet ist, und ein Maximalwert einer Dicke des ersten Abschnitts kleiner oder gleich einem Abstand zwischen der ersten Seitenfläche und der zweiten Seitenfläche ist.

4. Elektronisches Gerät nach Anspruch 2 oder 3, wobei der erste Klebstoff ferner einen zweiten Abschnitt umfasst, der auf dem zweiten Bereich angeordnet ist, und ein Maximalwert einer Dicke des zweiten Abschnitts kleiner oder gleich einer Dicke der Funktionsschicht ist.

5. Elektronisches Gerät nach einem der Ansprüche 1 bis 4, wobei der erste Klebstoff aus einem Schmelzklebstoff hergestellt ist.

6. Elektronisches Gerät nach einem der Ansprüche 1 bis 5, wobei der Randrahmen einen ersten Randrahmen, einen zweiten Randrahmen und einen dritten Randrahmen umfasst, wobei der erste Randrahmen gegenüber der ersten Seitenfläche angeordnet ist, ein Ende des ersten Randrahmens mit dem zweiten Randrahmen verbunden ist und ein anderes Ende des ersten Randrahmens mit dem dritten Randrahmen verbunden ist;
der erste Vorsprung umfasst einen ersten Teilvorsprung und einen zweiten Teilvorsprung, die miteinander verbunden sind, wobei eine Erstreckungsrichtung des ersten Teilvorsprungs parallel zu einer Erstreckungsrichtung des ersten Randrahmens ist, eine Erstreckungsrichtung des zweiten Teilvorsprungs parallel zu einer Erstreckungsrichtung des zweiten Randrahmens ist, der erste Teilvorsprung eine erste Seitenwand-Teiloberfläche umfasst, die vom Randrahmen abgewandt ist, der zweite Teilvorsprung eine zweite Seitenwand-Teiloberfläche umfasst, die vom Randrahmen abgewandt ist, die erste Seitenwand-Teiloberfläche und die zweite Seitenwand-Teiloberfläche die erste Seitenwandfläche bilden, der zweite Klebstoff ein erstes Klebstoffsegment und ein zweites Klebstoffsegment umfasst, die miteinander verbunden sind, wobei das erste Klebstoffsegment zwischen der ersten Seitenwand-Teiloberfläche und dem Anzeigebildschirm angeordnet ist und das zweite Klebstoffsegment zwischen der zweiten Seitenwand-Teiloberfläche und dem Anzeigebildschirm angeordnet ist; und/oder
Der zweite Vorsprung umfasst einen dritten Teilvorsprung und einen vierten Teilvorsprung, die miteinander verbunden sind, wobei eine Erstreckungsrichtung des dritten Teilvorsprungs parallel zur Erstreckungsrichtung des ersten Randrahmens verläuft, eine Erstreckungsrichtung des vierten Teilvorsprungs parallel zur Erstreckungsrichtung des dritten Randrahmens verläuft, der dritte Teilvorsprung eine dritte Seitenwand-Teilfläche umfasst, die vom Randrahmen abgewandt ist, der vierte Teilvorsprung eine vierte Seitenwand-Teilfläche umfasst, die vom Randrahmen abgewandt ist, die dritte Seitenwand-Teilfläche und die vierte Seitenwand-Teilfläche die zweite Seitenwandfläche bilden, der dritte Klebstoff einen dritten Klebstoffabschnitt und einen vierten Klebstoffabschnitt umfasst, die miteinander verbunden sind, der dritte Klebstoffabschnitt zwischen der dritten Seitenwand-Teilfläche und dem Bildschirm angeordnet ist und der vierte Klebstoffabschnitt zwischen der vierten Seitenwand-Teilfläche und dem Bildschirm angeordnet ist.

7. Elektronische Vorrichtung nach einem der Ansprüche 1 bis 6, wobei ein erster Freiraum zwischen dem ersten Vorsprung und dem Tonauslasskanal vorgesehen ist und Verbindungspositionen zwischen dem ersten Klebstoff, dem zweiten Klebstoff und dem vierten Klebstoff im ersten Freiraum angeordnet sind; und
ein zweiter Freiraum zwischen dem zweiten Vorsprung und dem Tonauslasskanal vorgesehen ist und Verbindungspositionen zwischen dem ersten Klebstoff, dem dritten Klebstoff und dem vierten Klebstoff im zweiten Freiraum angeordnet sind.

8. Elektronische Vorrichtung nach einem der Ansprüche 1 bis 7, wobei der zweite Klebstoff aus Silikon besteht und/oder der dritte Klebstoff aus Silikon besteht.

9. Elektronische Vorrichtung nach einem der Ansprüche 1 bis 8,
wobei die elektronische Vorrichtung ferner einen fünften Klebstoff umfasst, wobei der fünfte Klebstoff zwischen dem Bildschirm und der Mittelplatte angeordnet ist und dazu konfiguriert ist, den Bildschirm mit der Mittelplatte zu verkleben.

10. Elektronische Vorrichtung nach Anspruch 9, wobei der fünfte Klebstoff ein erstes Ende umfasst, das dem Tonauslasskanal zugewandt ist, der zweite Klebstoff mit dem ersten Ende des fünften Klebstoffs verbunden ist und der dritte Klebstoff mit dem ersten Ende des fünften Klebstoffs verbunden ist.

11. Elektronische Vorrichtung nach einem der Ansprüche 1 bis 10, wobei der vierte Klebstoff aus einem Schmelzklebstoff besteht.

12. Elektronische Vorrichtung nach einem der Ansprüche 1 bis 11, wobei eine Aussparung an der Abdeckplatte vorgesehen ist oder eine Aussparung am Randrahmen vorgesehen ist; und
der Tonauslasskanal durch die Aussparung mit der Außenseite in Verbindung steht.

13. Elektronische Vorrichtung nach einem der Ansprüche 1 bis 12, wobei der Tonauslasskanal eine erste Kante und eine zweite Kante in einer Längsrichtung umfasst, wobei eine orthogonale Projektion der ersten Kante auf eine Ebene, in der sich der erste Bereich befindet, in dem ersten Bereich liegt und eine orthogonale Projektion der zweiten Kante auf die Ebene, in der sich der erste Bereich befindet, in dem ersten Bereich liegt.

14. Elektronische Vorrichtung nach einem der Ansprüche 1 bis 13, wobei ein Ende des ersten Vorsprungs, das vom Tonauslasskanal abgewandt ist, mit einem Ende des zweiten Vorsprungs verbunden ist, das vom Tonauslasskanal abgewandt ist.

15. Elektronische Vorrichtung nach einem der Ansprüche 1 bis 14, wobei sich der zweite Klebstoff auf einer Seite des Tonauslasskanals befindet und sich der dritte Klebstoff auf einer anderen Seite des Tonauslasskanals befindet.

## Revendications

1. Dispositif électronique (100), comprenant :
un écran d'affichage (120), dans lequel l'écran d'affichage comprend une plaque de recouvrement (121) et un panneau d'affichage, la plaque de recouvrement est située sur un côté d'affichage du panneau d'affichage, et une surface latérale circonférentielle de la plaque de recouvrement fait saillie par rapport à une surface latérale circonférentielle du panneau d'affichage (122), et
un cadre intermédiaire (140), dans lequel l'écran d'affichage est monté sur le cadre intermédiaire, le cadre intermédiaire comprend un cadre de bordure (141) et une plaque intermédiaire, le cadre de bordure est relié à un bord circonférentiel de la plaque intermédiaire (l45) ; un premier bossage (1421) et un second bossage (1422) sont disposés sur une surface circonférentielle interne du cadre de bordure, le premier bossage et le second bossage s'étendent tous deux dans une direction circonférentielle de la surface circonférentielle interne du cadre de bordure, le premier bossage et le second bossage sont espacés l'un de l'autre, et un canal de sortie de son (150) est défini conjointement par l'écran d'affichage, le cadre de bordure, le premier bossage et le second bossage ;
le premier bossage comprend une première surface de paroi latérale (1221) orientée à l'opposé du cadre de bordure et une première surface supérieure orientée à l'opposé de la plaque intermédiaire, et le second bossage comprend une seconde surface de paroi latérale orientée à l'opposé du cadre de bordure et une seconde surface supérieure orientée à l'opposé de la plaque intermédiaire ;
le panneau d'affichage comprend une première surface latérale, la première surface latérale est un côté du panneau d'affichage faisant face au canal de sortie de son, la première surface latérale comprend une première zone (1222), et la première zone correspond au canal de sortie de son ; et
un premier adhésif (161) est disposé sur la première zone, un deuxième adhésif (1621) est disposé entre l'écran d'affichage et la première surface de paroi latérale, un troisième adhésif (1622) est disposé entre l'écran d'affichage et la seconde surface de paroi latérale, un quatrième adhésif (163) est disposé entre la plaque de recouvrement et la première surface supérieure et disposé entre la plaque de recouvrement et la seconde surface supérieure, une extrémité du premier adhésif est reliée au deuxième adhésif, une autre extrémité du premier adhésif est reliée au troisième adhésif, le deuxième adhésif est relié au quatrième adhésif, et le troisième adhésif est relié au quatrième adhésif.

2. Dispositif électronique selon la revendication 1, dans lequel l'écran d'affichage comprend en outre une couche fonctionnelle, la couche fonctionnelle est située sur un côté du panneau d'affichage orienté à l'opposé de la plaque de recouvrement, et la surface latérale circonférentielle du panneau d'affichage fait saillie par rapport à une surface latérale circonférentielle de la couche fonctionnelle ;
le panneau d'affichage comprend en outre une seconde zone, la seconde zone est située sur une surface d'un côté du panneau d'affichage faisant face à la couche fonctionnelle, la seconde zone est exposée depuis la couche fonctionnelle, et la seconde zone est reliée à la première zone ; et
le premier adhésif est disposé à la fois sur la première zone et sur la seconde zone.

3. Dispositif électronique selon la revendication 2, dans lequel la plaque de recouvrement comprend une seconde surface latérale, la seconde surface latérale et la première surface latérale sont orientées dans la même direction, le premier adhésif comprend une première partie disposée sur la première zone, et une valeur maximale d'une épaisseur de la première partie est inférieure ou égale à une distance entre la première surface latérale et la seconde surface latérale.

4. Dispositif électronique selon la revendication 2 ou 3, dans lequel le premier adhésif comprend en outre une seconde partie disposée sur la seconde zone, et une valeur maximale d'une épaisseur de la seconde partie est inférieure ou égale à une épaisseur de la couche fonctionnelle.

5. Dispositif électronique selon l'une quelconque des revendications 1 à 4, dans lequel le premier adhésif est constitué d'un adhésif thermofusible.

6. Dispositif électronique selon l'une quelconque des revendications 1 à 5, dans lequel le cadre périphérique comprend un premier cadre périphérique, un deuxième cadre périphérique et un troisième cadre périphérique, le premier cadre périphérique est disposé à l'opposé de la première surface latérale, une extrémité du premier cadre périphérique est reliée au deuxième cadre périphérique, et une autre extrémité du premier cadre périphérique est reliée au troisième cadre périphérique ;
le premier bossage comprend un premier sous-bossage et un second sous-bossage qui sont reliés, une direction d'extension du premier sous-bossage est parallèle à une direction d'extension du premier cadre périphérique, une direction d'extension du second sous-bossage est parallèle à une direction d'extension du deuxième cadre périphérique, le premier sous-bossage comprend une première sous-surface de paroi latérale tournée à l'opposé du cadre périphérique, le second sous-bossage comprend une seconde sous-surface de paroi latérale tournée à l'opposé du cadre périphérique, la première sous-surface de paroi latérale et la seconde sous-surface de paroi latérale forment la première surface de paroi latérale, le second adhésif comprend un premier segment adhésif et un second segment adhésif qui sont reliés, le premier segment adhésif est situé entre la première sous-surface de paroi latérale et l'écran d'affichage, et le second segment adhésif est situé entre la seconde sous-surface de paroi latérale et l'écran d'affichage ; et/ou
le second bossage comprend un troisième sous-bossage et un quatrième sous-bossage qui sont reliés, une direction d'extension du troisième sous-bossage est parallèle à la direction d'extension du premier cadre de bordure, une direction d'extension du quatrième sous-bossage est parallèle à une direction d'extension du troisième cadre de bordure, le troisième sous-bossage comprend une troisième sous-surface de paroi latérale orientée à l'opposé du cadre de bordure, le quatrième sous-bossage comprend une quatrième sous-surface de paroi latérale orientée à l'opposé du cadre de bordure, la troisième sous-surface de paroi latérale et la quatrième sous-surface de paroi latérale forment la seconde surface de paroi latérale, le troisième adhésif comprend un troisième segment adhésif et un quatrième segment adhésif qui sont reliés, le troisième segment adhésif est situé entre la troisième sous-surface de paroi latérale et l'écran d'affichage, et le quatrième segment adhésif est situé entre la quatrième sous-surface de paroi latérale et l'écran d'affichage.

7. Le dispositif électronique selon l'une quelconque des revendications 1 à 6, dans lequel un premier espace d'évitement est prévu entre le premier bossage et le canal de sortie de son, et les positions de connexion entre le premier adhésif, le second adhésif et le quatrième adhésif sont situées dans le premier espace d'évitement ; et
un second espace d'évitement est prévu entre le second bossage et le canal de sortie de son, et les positions de connexion entre le premier adhésif, le troisième adhésif et le quatrième adhésif sont situées dans le second espace d'évitement.

8. Le dispositif électronique selon l'une quelconque des revendications 1 à 7, dans lequel le second adhésif est constitué de silicone, et/ou le troisième adhésif est constitué de silicone.

9. Le dispositif électronique selon l'une quelconque des revendications 1 à 8,
dans lequel le dispositif électronique comprend en outre un cinquième adhésif, dans lequel le cinquième adhésif est agencé entre l'écran d'affichage et la plaque intermédiaire et est configuré pour lier l'écran d'affichage à la plaque intermédiaire.

10. Le dispositif électronique selon la revendication 9, dans lequel le cinquième adhésif comprend une première extrémité faisant face au canal de sortie de son, le second adhésif est relié à la première extrémité du cinquième adhésif, et le troisième adhésif est relié à la première extrémité du cinquième adhésif.

11. Le dispositif électronique selon l'une quelconque des revendications 1 à 10, dans lequel le quatrième adhésif est constitué d'un adhésif thermofusible.

12. Le dispositif électronique selon l'une quelconque des revendications 1 à 11, dans lequel une encoche d'évitement est prévue sur la plaque de recouvrement, ou une encoche d'évitement est prévue sur le cadre de bordure ; et
le canal de sortie de son est en communication avec l'extérieur à travers l'encoche d'évitement.

13. Le dispositif électronique selon l'une quelconque des revendications 1 à 12, dans lequel le canal de sortie de son comprend un premier bord et un second bord dans une direction de longueur, une projection orthogonale du premier bord sur un plan dans lequel la première zone est située est dans la première zone, et une projection orthogonale du second bord dans le plan dans lequel la première zone est située est dans la première zone.

14. Le dispositif électronique selon l'une quelconque des revendications 1 à 13, dans lequel une extrémité du premier bossage orientée à l'opposé du canal de sortie de son est reliée à une extrémité du second bossage orientée à l'opposé du canal de sortie de son.

15. Le dispositif électronique selon l'une quelconque des revendications 1 à 14, dans lequel le second adhésif est situé sur un côté du canal de sortie de son et le troisième adhésif est situé sur un autre côté du canal de sortie de son.
